(19) Europäisches Patentamt
European Patent Office
Office européen des brevets

(11) EP 2 549 408 A1

(12) **EUROPÄISCHE PATENTANMELDUNG**

(43) Veröffentlichungstag:
**23.01.2013 Patentblatt 2013/04**

(51) Int Cl.:
***G06K 9/46*** *(2006.01)* ***G06K 9/00*** *(2006.01)*

(21) Anmeldenummer: **11005962.3**

(22) Anmeldetag: **20.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Delphi Technologies, Inc.**
**Troy MI 48007 (US)**

(72) Erfinder:
- **Nunn, Christian Markus**
  **42117 Wuppertal (DE)**
- **Meuter, Mirko Nicolas**
  **40699 Erkrath (DE)**
- **Mueller, Dennis**
  **40699 Erkrath (DE)**
- **Görmer, Steffen**
  **42881 Wuppertal (DE)**

(74) Vertreter: **Manitz, Finsterwald & Partner GbR**
**Postfach 31 02 20**
**80102 München (DE)**

(54) **Verfahren zur Detektion und Klassifikation von Objekten**

(57) Bei einem Verfahren zur Detektion und Klassifikation von Objekten wie insbesondere Fahrbahnmarkierungen ausgehend von einem Bild der Umgebung im Sichtbereich einer insbesondere einem Fahrzeug zugeordneten Bildaufnahmeeinrichtung wird für eine anfängliche Detektion von Objektkandidaten eine schnelle Hough-Transformation ausgeführt, bei der zur Bestimmung einer jeweiligen Votierstelle im Hough-Raum die Gradientenrichtung von ermittelten Kantenpunkten herangezogen wird. Zur Klassifikation der Objektkandidaten und zur Akkumulation zusätzlicher Merkmale wird als Hough-Raum ein zusätzliche Ebenen umfassender Raum verwendet.

EP 2 549 408 A1

Printed by Jouve, 75001 PARIS (FR)

## Beschreibung

Die vorliegende Erfindung betrifft ein Verfahren zur Detektion und Klassifikation von Objekten wie insbesondere Fahrbahnmarkierungen ausgehend von einem Bild der Umgebung im Sichtbereich einer insbesondere einem Fahrzeug zugeordneten Bildaufnahmeeinrichtung.

Verfahren zur Detektion und Klassifikation von Fahrbahnmarkierungen wie insbesondere Fahrbahnstreifen können insbesondere bei optischen Systemen zur Warnung vor einem Verlassen der Fahrspur und zur Einhaltung der Fahrspur Verwendung finden. Bei den meisten Fahrbahndetektions- und Verfolgungssystemen (LDT, lane detection and tracking systems) umfasst die anfängliche Fahrbahndetektion einen Verfahrensschritt, bei dem zur Extraktion der Fahrbahnstreifen eine Hough-Transformation durchgeführt wird. Die Hough-Transformation wird zur Extraktion der Position und Orientierung von Fahrbahnmarkierungskandidaten verwendet.

Die bisher bekannten Detektions- und Klassifikationsverfahren der eingangs genannten Art erfordern einen relativ hohen Rechenaufwand, der eine entsprechend hohe Rechenzeit mit sich bringt. Zudem ist die Robustheit dieser bekannten Verfahren unzureichend.

Der Erfindung liegt die Aufgabe zugrunde, ein verbessertes Verfahren der eingangs genannten Art zu schaffen, bei dem die Rechenzeit für die Detektion und Klassifikation der betreffenden Objekte wie insbesondere Fahrbahnmarkierungen verkürzt und/oder die Robustheit der Detektion und Klassifikation erhöht ist.

Erfindungsgemäß wird diese Aufgabe gelöst durch ein Verfahren zur Detektion und Klassifikation von Objekten wie insbesondere Fahrbahnmarkierungen ausgehend von einem Bild der Umgebung im Sichtbereich einer insbesondere einem Fahrzeug zugeordneten Bildaufnahmeeinrichtung, bei dem für eine anfängliche Detektion von Objektkandidaten eine schnelle Hough-Transformation ausgeführt wird, bei der zur Bestimmung einer jeweiligen Votierstelle im Hough-Raum die Gradientenrichtung von ermittelten Kantenpunkten herangezogen wird, und bei dem zur Klassifikation der Objektkandidaten zur Akkumulation zusätzlicher Merkmale als Hough-Raum ein zusätzliche Ebenen umfassender Raum verwendet wird.

Aufgrund der erfindungsgemäßen Ausgestaltung des Verfahrens ergeben sich insgesamt deutlich kürzere Rechenzeiten und eine höhere Sicherheit oder Robustheit bei der jeweiligen Detektion und Klassifikation.

In den zusätzlichen Ebenen des Hough-Raums können insbesondere Bild-Deskriptoren akkumuliert werden.

Gemäß einer bevorzugten praktischen Ausgestaltung des erfindungsgemäßen Verfahrens wird für eine jeweilige Stelle im Hough-Raum, an der ein Objektkandidat wie insbesondere ein Fahrbahnmarkierungskandidat detektiert wurde, jeweils ein Merkmalsvektor erzeugt, der die akkumulierten zusätzlichen Merkmale der zusätzlichen Ebenen des Hough-Raums umfasst.

Von Vorteil ist insbesondere, wenn anhand der akkumulierten zusätzlichen Merkmale zunächst falsche Objektkandidaten, insbesondere falsche Fahrbahnmarkierungskandidaten, aussortiert und anschließend die verbleibenden Objektkandidaten bzw. Fahrbahnmarkierungskandidaten anhand vorgebbarer unterschiedlicher Klassen klassifiziert werden.

Zur Klassifikation der erfassten Objektkandidaten kann dann ein lernender Klassifizierer verwendet werden.

Als lernender Klassifizierer kann beispielsweise ein künstliches Neuronales Netzwerk und/oder eine Support Vector Machine verwendet werden.

Der lernende Klassifizierer wird vorteilhafterweise mittels eines typische Beispiele unterschiedlicher Objektkandidaten, insbesondere unterschiedlicher Fahrbahnmarkierungskandidaten, umfassenden Datensatzes trainiert.

Bei der Detektion und Klassifikation von Fahrbahnmarkierungen werden beispielsweise detektierte Teernähte, Fahrbahnrillen, Lichtreflexionen und/oder dergleichen als falsche Fahrbahnmarkierungskandidaten aussortiert.

Die für die Klassifizierung von Fahrbahnmarkierungskandidaten verwendeten Klassen können zumindest teilweise durch eine linke Kante einer Fahrbahnmarkierung, eine rechte Kante einer Fahrbahnmarkierung, eine typische Fahrbahnmarkierungsgrenze, einen Gehweg, eine Leitblanke und/oder dergleichen charakterisiert sein.

Von Vorteil ist insbesondere auch, wenn für die anfängliche Detektion von Objektkandidaten im Hough-Raum auch in Bereiche benachbarter Winkel votiert wird, womit vorhandenes Rauschen mit berücksichtigt wird.

Mit dem erfindungsgemäßen Verfahren wird insbesondere die Detektion und Klassifikation von Fahrbahnmarkierungen verbessert, wie sie bei optischen Systemen zur Warnung vor einem Verlassen der Fahrspur und zur Einhaltung der Spur angewandt werden. Grundsätzlich ist das erfindungsgemäße Verfahren jedoch auch in anderen Bereichen einsetzbar.

Erfindungsgemäß wird für die anfängliche Detektion eine modifizierte schnelle Hough-Transformation vorgeschlagen, bei der die Gradientenrichtung von Kanten- oder Eckpunkten herangezogen wird, um die entsprechende Votierstelle in dem Hough-Raum oder Hough-Parameterraum zu bestimmen. Zudem werden erfindungsgemäß zur Klassifizierung unterschiedlicher Objekt- bzw. Fahrbahnmarkierungskandidaten spezielle statistische Merkmale aus dem Hough-Raum extrahiert. Dem liegt der Gedanke zugrunde, einen mehrere Ebenen umfassenden Hough-Raum zu verwenden, um zusätzliche Merkmale in den zusätzlichen Ebenen zu akkumulieren.

Nachdem die Votierstelle im Hough-Raum für jedes Pixel bzw. Kantenpixel bestimmt ist, werden zusätzliche Bild-Diskriptoren in den zusätzlichen Ebenen des Hough-Raums akkumuliert und damit in den Hough-Raum transformiert. Nachdem der Hough-Raum erzeugt wurde, kann ein jeweiliger Merkmalsvektor gebildet werden, indem die akkumulierten Werte in jeder zusätzlichen Ebene des Hough-Raums an bestimmten Stellen, an denen eine Fahrbahnmarkierung wie insbesondere ein Fahrbahnstreifen detektiert wurde, hinzugefügt werden.

Dabei können falsche Kandidaten wie beispielsweise Teernähte, Fahrbahnrillen, Lichtreflexionen oder dergleichen aussortiert werden, und die verbleibenden Kandidaten können in unterschiedliche Klassen einsortiert werden, die beispielsweise durch eine linke Kante eines Fahrbahnmarkierungsstreifens, eine rechte Kante einer Fahrbahnmarkierungsstreifens, eine typische Fahrbahnmarkierungsgrenze, einen Gehweg, eine Leitblanke und/oder dergleichen charakterisiert sein können. Zur Trennung oder Unterscheidung solcher Klassen wird beispielsweise ein Datensatz mit typischen Beispielen verwendet, um einen lernenden Klassifizierer entsprechend anzupassen. Als lernender Klassifizierer kann, wie bereits erwähnt, beispielsweise ein künstliches Neuronales Netzwerk und/oder eine Support Vector Machine verwendet werden.

Mit der gradienten- bzw. gradientenrichtungsbasierten Hough-Abstimmung und der erfindungsgemäßen Kandidatenklassifikation ergibt sich eine deutliche Verbesserung im Hinblick auf die Datenverarbeitungszeit und die Robustheit der erhaltenen Ergebnisse.

Das erfindungsgemäße Verfahren bringt demzufolge vor allem die nachstehenden Vorteile mit sich:

Mit der erfindungsgemäßen Hough-Transformation auf der Basis der Gradientenrichtung wird der Rechenaufwand deutlich reduziert, wodurch auch die entsprechenden Rechenkosten minimiert werden. Die Genauigkeit der Positions- und Richtungsschätzung wird deutlich erhöht. Die Ausdehnung der Hough-Transformation auf mehrere Ebenen bringt zusätzliche Information mit sich und ermöglicht für die Klassifikation eine Extraktion zusätzlicher Merkmalsdeskriptoren. Die Klassifikation von lokalen Hough-Bereichen über mehrere Ebenen gewährleistet ein robustes und leistungsstarkes System. Anders als bei anderen Klassifikationstechniken müssen nur lokale Merkmale aus einem rechtwinkligen interessierenden Bereich extrahiert werden. Damit ergibt sich im Hinblick auf die Rechenkosten eine sehr effektive Merkmalsextraktion.

Gegenstand der Erfindung ist zudem ein Computerprogramm mit Programmcodemitteln, um das vorstehend beschriebene Verfahren durchzuführen, wenn das Programm auf einem Computer oder einer entsprechenden Recheneinheit ausgeführt wird.

Gegenstand der Erfindung ist auch eine Computerprogrammprodukt mit Programmcodemitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer wird hierbei eine beliebige Datenverarbeitungseinrichtung verstanden, mit der das Verfahren ausgeführt werden kann. Dabei kann eine solche Datenverarbeitungseinrichtung insbesondere digitale Signalprozessoren und/oder Mikrorprozessoren umfassen, mit denen das Verfahren ganz oder in Teilen ausgeführt wird.

Schließlich ist Gegenstand der Erfindung auch eine Vorrichtung zur Detektion und Klassifikation von Objekten wie insbesondere Fahrbahnmarkierungen ausgehend von einem Bild der Umgebung im Sichtbereich einer insbesondere einem Fahrzeug zugeordneten Bildaufnahmeeinrichtung, mit einer Datenverarbeitungseinrichtung, die zur Durchführung des vorstehend beschriebenen Verfahrens ausgeführt ist.

Die Erfindung wird im Folgenden anhand von Ausführungsbeispielen unter Bezugnahme auf die Zeichnung näher erläutert; in dieser zeigen:

Fig. 1 einen Unterbereich eines mittels einer Bildaufnahmeeinrichtung aufgenommenen Bildes,

Fig. 2 das Ergebnis einer Hough-Transformation (Betrag) und

Fig. 3 bis 5 beispielhafte Bilder, in denen verschiedene Klassifikationsergebnisse markiert sind.

Bei einem Verfahren zur Detektion und Klassifikation von Objekten wie insbesondere Fahrbahnmarkierungen ausgehend von einem Bild der Umgebung im Sichtbereich einer insbesondere einem Fahrzeug zugeordneten Bildaufnahmeeinrichtung wird für eine anfängliche Detektion von Objektkandidaten, insbesondere Fahrbahnmarkierungskandidaten, eine schnelle Hough-Transformation ausgeführt, bei der zur Bestimmung einer jeweiligen Votierstelle im Hough-Raum die Gradientenrichtung von zuvor ermittelten Kantenpunkten herangezogen wird. Zudem wird zur Klassifikation der Objekt- bzw. Fahrbahnmarkierungskandidaten zur Akkumulation zusätzlicher Merkmale als Hough-Raum ein zusätzliche Ebenen umfassender Raum verwendet. Dabei können in den zusätzlichen Ebenen des Hough-Raums insbesondere Bild-Deskriptoren akkumuliert werden. Für eine jeweilige Stelle im Hough-Raum, an der ein Objektkandidat detektiert wurde, kann jeweils ein Merkmalsvektor erzeugt werden, der die akkumulierten zusätzlichen Merkmale der zusätzlichen Ebenen des Hough-Raums umfasst.

Anhand der akkumulierten zusätzlichen Merkmale können zunächst falsche Objektkandidaten aussortiert und anschließend die verbleibenden Objektkandidaten in vorgebbare unterschiedliche Klassen klassifiziert werden. Zur Klassifikation der erfassten Objektkandidaten kann ein lernender Klassifizierer wie beispielsweise ein künstliches Neuronales Netzwerk und/oder eine Support Vector Machine verwendet werden. Der lernende Klassifizierer kann mittels eines typische Beispiele unterschiedlicher Objektkandidaten umfassenden Datensatzes trainiert werden. Bei der Detektion und Klassifikation von Fahrbahnmarkierungen können beispielsweise detektierte Teernähte, Fahrbahnrillen, Lichtreflexionen und/oder dergleichen als falsche Fahrbahnmarkierungskandidaten aussortiert werden. Die für die Klassifizierung von Fahrbahnmarkierungskandidaten verwendeten Klassen können zumindest teilweise beispielsweise durch eine linke Kante eines Fahrbahnmarkierungsstreifens, eine rechte Kante eines Fahrbahnmarkierungsstreifens, eine typische Fahrbahnmarkierungsgrenze, einen Gehweg, eine Leitblanke und/oder dergleichen charakterisiert sein. Für die anfängliche Detektion von Objektkandidaten im Hough-Raum kann auch in Bereiche benachbarter Winkel votiert werden, um Rauschen zu berücksichtigen.

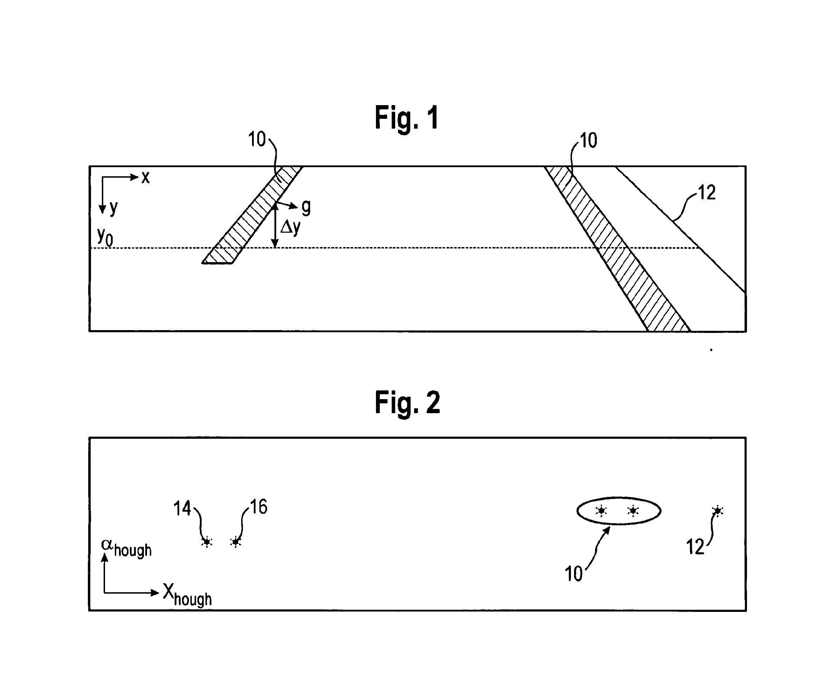

Fig. 1 zeigt einen Unterbereich eines mittels einer Bildaufnahmeeinrichtung aufgenommenen Bildes, wobei x und y die Bildkoordinaten darstellen.

Fig. 2 zeigt das Ergebnis einer Hough-Transformation (Betrag), wobei $\alpha_{hough}$ und $X_{hough}$ Koordinaten des Hough-Parameterraums darstellen.

Wie anhand der beiden Fig. 1 und 2 zu erkennen ist, sind im Hough-Raum ein linker sowie ein rechter Fahrbahnmarkierungsstreifen 10 bzw. deren linke und rechte Kanten 14, 16 sowie ein rechter Fahrbahnrand 12 deutlich erfasst.

Mit dem erfindungsgemäßen Verfahren ergibt sich eine deutliche Verbesserung der Erfassung und Klassifikation von Fahrbahnmarkierungen bei visuellen Systemen zur Warnung vor einem Verlassen der Fahrspur und zur Einhaltung der Fahrspur. Das Verfahren kann grundsätzlich jedoch auch in anderen Bereichen angewandt werden. Für die Detektion wird eine modifizierte schnelle Hough-Transformation verwendet. Die Hough-Transformation für Fahrbahnmarkierungen oder -streifen transformiert zunächst jeden Punkt/Kante oberhalb eines Grenzwertes in einen zweidimensionalen Parameterraum, wobei zum Beispiel die Beziehung $y = m \cdot x + b \rightarrow m, b$ gilt. Im Unterschied zu einer herkömmlichen Hough-Transformation wird erfindungsgemäß für jeden Eck- oder Kantenpunkt die Gradientenrichtung berechnet. Jeder Satz von Parametern, der die Kante erzeugen kann, wird erhöht. Da der Gradient bzw. die Gradientenrichtung senkrecht zur Richtung der Fahrbahnmarkierung ist, kann die entsprechende Stelle im Hough-Parameterraum direkt bestimmt werden:

$$\alpha_{grad} = \arctan(\frac{y_{grad}}{x_{grad}}) \quad (1)$$

$$\alpha_{hough} = \alpha_{grad} \pm n\Delta_{\alpha} \quad (2)$$

$$n = 0, 1, 2, \ldots N \quad (3)$$

$$x_{hough} = x - \Delta y \cdot \alpha_{hough} \quad (4)$$

$$\Delta y = y_0 - y \quad (5)$$

Da die Gradienteninformation bzw. die Gradientenrichtungsinformation benutzt wird, ist der Abstimmungsprozess wesentlich schneller, der somit keine größeren Laufzeitanforderungen mit sich bringt. Um Ungenauigkeiten zu berücksichtigen, kann auch in Bereiche benachbarter Winkel votiert werden (vgl. die obigen Beziehungen (2) und (3)). Dies stellt eine weitere zweckmäßige Abwandlung dar, mit der Rauschen berücksichtigt werden kann. Mit der modifizierten Transformation wird der Hough-Parameterraum für einen kurzen Linien- oder Streifenabschnitt um oder über die erwartete entsprechende Position akkumuliert, anstatt für alle Parameter der Linie bzw. des Streifens zu votieren.

Für den Schritt der Detektion der Linie kann eine Hough-Ebene zur Akkumulation des Betrags des Gradienten M verwendet werden, während eine andere Ebene zur Zählung der Anzahl von Stimmen N verwendet werden kann. Nach der Abstimmung können diese Werte für jeden Punkt miteinander multipliziert werden. Danach können Linien dadurch aufgefunden werden, dass in der resultierenden Ebene nach Maxima gesucht wird. Für die Klassifikation von Fahrbahnmarkierungen wird dieses Verfahren erweitert. So werden zusätzliche lokale Merkmale an jedem Eck- oder Kantenpixel gesammelt. Danach werden diese Merkmale im Hough-Raum akkumuliert. Es wird also ein mehrere Ebenen umfassender Hough-Raum verwendet, bei dem jede Ebene zur Akkumulation eines lokalen Merkmals genutzt wird. Es können beispielsweise die folgenden Hough-Räume erzeugt werden:

- Gradient (Betrag): M
- Menge (1): N
- Gradient (x-Richtung): dx
- Gradient (y-Richtung): dy
- Grauwert: v

Zur Erhöhung des Signal/Rausch-Verhältnisses können die Hough-Abbildungen beispielsweise mittels eines Gaußschen Filters geglättet werden. Die Standardabweichung eines solchen Filters kann an die erwartete Breite der Fahrbahnmarkierung bzw. des Fahrbahnsstreifens angepasst werden. Dazu kann die erwartete Fahrbahnmarkierungsbreite (zum Beispiel Deutschland: 8 - 20 cm) vom Weltkoordinatensystem in das Bildkoordinatensystem projiziert werden.

Nachdem der Abstimmungsvorgang abgeschlossen ist, kann ein Merkmalsvektor dadurch gebildet werden, dass die Werte in jeder Ebene bei verschiedenen Umgebungsstellen einer detektierten Linie hinzugefügt werden. Für jedes lokale Maximum wird ein Merkmalsvektor aus der Nachbarschaft errechnet. Damit können insbesondere statistische Merkmale aus jeder Hough-Ebene extrahiert werden. Die Größe des umgebenden Bereichs kann dadurch berechnet werden, dass die erwartete Breite einer Fahrbahnmarkierung und der Abweichungswinkel von der Bildebene in den Hough-Bereich transformiert wird. Zur Klassifikation kann beispielsweise eines oder mehrere der folgenden statistischen Merkmale gewählt werden:

- Dichte (Wahrscheinlichkeitsdichtefunktion)
- Minimum/Maximum
- Durchschnittsfunktionswert
- Mittelwert
- Standardabweichung
- Histogramme
- Quantile
- Schiefe
- Gradientenrichtung (arctan (dy/dx))
- Histogramme von Gradientenrichtungen
- Fourierkoeffizienten
- usw.

Die berechneten Merkmale bilden einen Merkmalsvektor, der mittels statistischer Klassifikationstechniken klassifiziert werden kann, wobei als Klassifizierer beispielsweise künstliche Neuronale Netzwerke, Support Vector Machines und/oder dergleichen verwendet werden können. Demzufolge kann ein Datensatz mit typischen Beispielen erzeugt werden, und es kann ein Klassifizierer entsprechend trainiert werden, um die betreffenden unterschiedlichen Klassen zu unterscheiden.

Dabei können beispielsweise die folgenden typischen Klassen voneinander unterschieden werden:

- Negative (Stördaten)
- Teernähte
- Fahrbahnrillen
- Lichtreflexionen
- linker Rand
- rechter Rand
- typische Fahrbahnbegrenzungen
- Gehwege
- Leitblanken

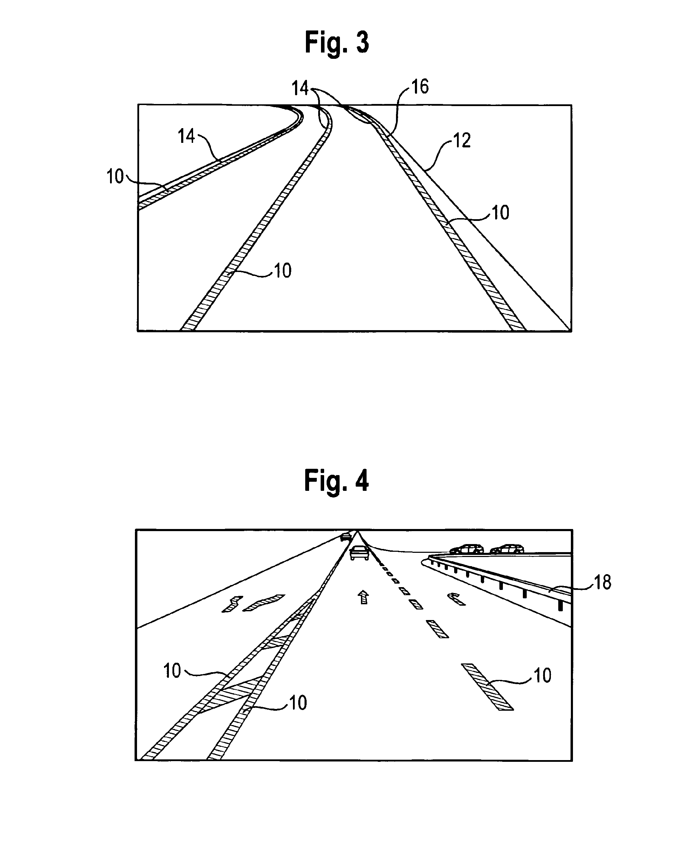

Die Fig. 3 bis 5 zeigen beispielhafte Bilder, in denen verschiedene Klassifikationsergebnisse markiert sind.

So sind in der Fig. 3 beispielsweise gültige Fahrbahnmarkierungsstreifen 10, ein Fahrbahnrand 12, einzelne linke Kanten 14 und eine einzelne rechte Kante 16 zu erkennen.

In der Fig. 4 sind beispielsweise gültige Fahrbahnmarkierungsstreifen 10 sowie eine Leitblanke 18 zu erkennen.

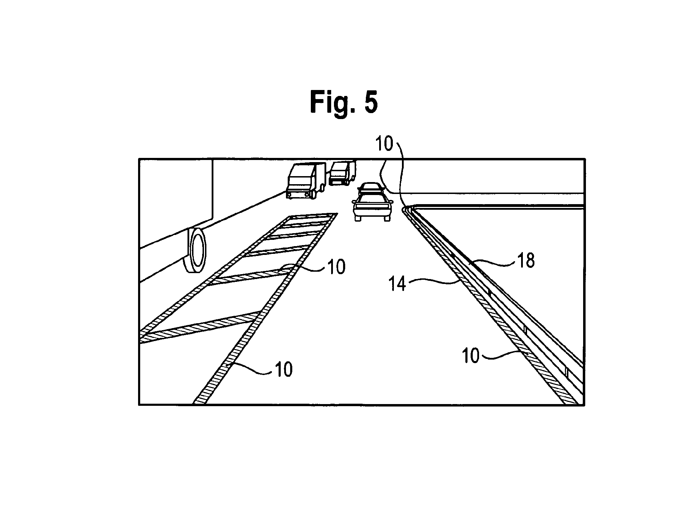

In Fig. 5 sind schließlich gültige Fahrbahnmarkierungsstreifen 10, eine einzelne linke Kante 14 sowie wieder eine Leitblanke 18 zu erkennen.

Negative (Störungen), Teernähte, Fahrbahnrillen und Lichtreflexionen wurden entfernt.

**Bezugszeichenliste**

10 gültige Fahrbahnmarkierungsstreifen

12 Fahrbahnrand

14 einzelne linke Kante

16 einzelne rechte Kante

18 Leitblanke

**Patentansprüche**

1. Verfahren zur Detektion und Klassifikation von Objekten (10-18) wie insbesondere Fahrbahnmarkierungen ausgehend von einem Bild der Umgebung im Sichtbereich einer insbesondere einem Fahrzeug zugeordneten Bildaufnahmeeinrichtung, bei dem für eine anfängliche Detektion von Objektkandidaten eine schnelle Hough-Transformation ausgeführt wird, bei der zur Bestimmung einer jeweiligen Votierstelle im Hough-Raum die Gradientenrichtung von ermittelten Kantenpunkten herangezogen wird, und bei dem zur Klassifikation der Objektkandidaten zur Akkumulation zusätzlicher Merkmale als Hough-Raum ein zusätzliche Ebenen umfassender Raum verwendet wird.

2. Verfahren nach Anspruch 1,
**dadurch gekennzeichnet,**
**dass** in den zusätzlichen Ebenen des Hough-Raums Bild-Deskriptoren akkumuliert werden.

3. Verfahren nach Anspruch 1 oder 2,
**dadurch gekennzeichnet,**
**dass** für eine jeweilige Stelle im Hough-Raum, an der ein Objektkandidat detektiert wurde, jeweils ein Merkmalsvektor erzeugt wird, der die akkumulierten zusätzlichen Merkmale der zusätzlichen Ebenen des Hough-Raums umfasst.

4. Verfahren nach einem der vorhergehenden Ansprüche,
**dadurch gekennzeichnet,**
**dass** anhand der akkumulierten zusätzlichen Merkmale zunächst falsche Objektkandidaten aussortiert und anschließend die verbleibenden Objektkandidaten anhand vorgebbarer unterschiedlicher Klassen klassifiziert werden.

5. Verfahren nach einem der vorhergehenden Ansprüche,
**dadurch gekennzeichnet,**
**dass** zur Klassifikation der erfassten Objektkandidaten ein lernender Klassifizierer verwendet wird.

6. Verfahren nach Anspruch 5,
**dadurch gekennzeichnet,**
**dass** als lernender Klassifizierer ein künstliches Neuronales Netzwerk und/oder eine Support Vector Machine verwendet wird.

7. Verfahren nach Anspruch 5 oder 6,
**dadurch gekennzeichnet,**
**dass** der lernende Klassifizierer mittels eines typische Beispiele unterschiedlicher Objektkandidaten umfassenden Datensatzes trainiert wird.

**8.** Verfahren nach einem der vorhergehenden Ansprüche,
**dadurch gekennzeichnet,**
**dass** bei der Detektion und Klassifikation von Fahrbahnmarkierungen detektierte Teernähte, Fahrbahnrillen, Lichtreflexionen und/oder dergleichen als falsche Fahrbahnmarkierungskandidaten aussortiert werden.

**9.** Verfahren nach einem der vorhergehenden Ansprüche,
**dadurch gekennzeichnet,**
**dass** die für die Klassifizierung von Fahrbahnmarkierungskandidaten verwendeten Klassen zumindest teilweise durch eine linke Kante (14) eines Fahrbahnmarkierungsstreifens (10), eine rechte Kante (16) einer Fahrbahnmarkierungsstreifens (10), eine typische Fahrbahnmarkierungsgrenze oder -rand (12), einen Gehweg, eine Leitplanke (18) und/oder dergleichen charakterisiert sind.

**10.** Verfahren nach einem der vorhergehenden Ansprüche,
**dadurch gekennzeichnet,**
**dass** für die anfängliche Detektion von Objektkandidaten im Hough-Raum auch in Bereiche benachbarter Winkel votiert wird.

**11.** Computerprogramm mit Programmcodemitteln zur Durchführung des Verfahrens nach einem der vorhergehenden Ansprüche, wenn das Computerprogramm auf einem Computer oder einer entsprechenden Recheneinheit ausgeführt wird.

**12.** Computerprogrammprodukt mit Programmcodemitteln, die auf einemcomputerlesbaren Datenträger gespeichert sind, zur Durchführung des Verfahrens nach einem der vorhergehenden Ansprüche 1 bis 10, wenn das Computerprogramm auf einem Computer oder einer entsprechenden Recheneinheit ausgeführt wird.

**13.** Vorrichtung zur Detektion und Klassifikation von Objekten (10 - 18) wie insbesondere Fahrbahnmarkierungen ausgehend von einem Bild der Umgebung im Sichtbereich einer insbesondere einem Fahrzeug zugeordneten Bildaufnahmeeinrichtung, mit einer Datenverarbeitungseinrichtung, die zur Durchführung des Verfahrens nach einem der Ansprüche 1 bis 10 ausgeführt ist.

10
12
x
y
y0
g
Δy
10
12
14
16
αhough
Xhough


Fig. 1

Fig. 2

Fig. 3

14
16
14
12
10
10
10

Fig. 4

18
10
10
10

Fig. 5

10
10
14
18
10
10

## EUROPÄISCHER RECHERCHENBERICHT

Nummer der Anmeldung
EP 11 00 5962

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 328 114 A1 (DELPHI TECH INC [US]) 1. Juni 2011 (2011-06-01)<br>* Absätze [0001], [0008] *<br>* Absatz [0046] *<br>* Absatz [0051] - Absätze [0052], [0054] *<br>* Absatz [0060] - Absätze [0065], [0067]; Abbildung 11 *<br>----- | 1-13 | INV.<br>G06K9/46<br>G06K9/00 |
| T | MIRKO MEUTER ET AL: "A novel approach to lane detection and tracking", INTELLIGENT TRANSPORTATION SYSTEMS, 2009. ITSC '09. 12TH INTERNATIONAL IEEE CONFERENCE ON, IEEE, PISCATAWAY, NJ, USA, 4. Oktober 2009 (2009-10-04), Seiten 1-6, XP031560119, ISBN: 978-1-4244-5519-5<br>* Abschnitt VI. *<br>----- | | |
| T | LEAVERS V F: "Shape Detection in Computer Vision using the Hough Transform; Chapter 6.3: Software Solutions", 1. Januar 1992 (1992-01-01), Springer-Verlag, London, GB, XP002667069, ISBN: 978-3-540-19723-2 Seiten 121-124,<br>* Abschnitt 6.3.2 - Abschnitt 6.3.3; Seite 122 - Seite 123 *<br>----- | | RECHERCHIERTE SACHGEBIETE (IPC)<br>G06K<br>G06T<br>G08G<br>B60R |
| T | BALLARD D H ET AL: "Computer Vision", 1. Januar 1982 (1982-01-01), COMPUTER VISION, PRENTICE HALL, PAGE(S) 123 - 131, XP002485299,<br>* Abschnitt 4.3 - Abschnitt 4.3.1; Seite 123 - Seite 125 *<br>-----<br>-/-- | | |

Der vorliegende Recherchenbericht wurde für alle Patentansprüche erstellt

| Recherchenort | Abschlußdatum der Recherche | Prüfer |
|---|---|---|
| Den Haag | 13. Januar 2012 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

1
EPO FORM 1503 03.82 (P04C03)

# EUROPÄISCHER RECHERCHENBERICHT

Nummer der Anmeldung
EP 11 00 5962

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| T | Vlacic L et al: "Intelligent Vehicle Technologies: Theory and Applications, Chapter 6: From door to door - principles and applications of computer vision for driver assistant systems", 2001, SAE International, Warrendale, US, XP002667070, ISBN: 0768007801 Seiten 157-166, * Seite 160, Zeile 21 - Seite 162, Absatz 1 * | | |
| T | DICKMANNS E: "Dynamic Vision for Perception and Control of Motion, Chapter 8.5: Road elements to be initialized", 1. Januar 2007 (2007-01-01), Springer-Verlag, London, GB, XP002667071, ISBN: 978-1-84628-637-7 Seiten 241-243, * Abschn. 8.5;Tabelle 8.2 * | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 13. Januar 2012 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 11 00 5962

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2012

| Im Recherchenbericht angeführtes Patentdokument | Datum der Veröffentlichung | Mitglied(er) der Patentfamilie | Datum der Veröffentlichung |
|---|---|---|---|
| EP 2328114 A1 | 01-06-2011 | AT 514140 T | 15-07-2011 |
| | | EP 1918853 A2 | 07-05-2008 |
| | | EP 2328114 A1 | 01-06-2011 |
| | | US 2008109118 A1 | 08-05-2008 |

EPO FORM P0461

Für nähere Einzelheiten zu diesem Anhang : siehe Amtsblatt des Europäischen Patentamts, Nr.12/82